# EUROPEAN PATENT SPECIFICATION

(11) **EP 4 634 255 B1**
(45) Date of publication and mention of the grant of the patent: **21.10.2026**
(21) Application number: 23832907.2
(22) Date of filing: 27.11.2023
(51) Int. Cl.: C08G 18/18, C08G 18/20, C08G 18/40, C08G 18/42, C08G 18/48, C08G 18/76, C08J 9/14, C08G 18/09

(54) **POLYURETHANE FOAM-FORMING REACTION MIXTURES, POLYURETHANE FOAMS FORMED THEREFROM, AND METHODS FOR THEIR PRODUCTION AND USE**
POLYURETHANSCHAUM-BILDENDE REAKTIONSMISCHUNGEN, DARAUS HERGESTELLTE POLYUREHANSCHÄUME, IHR HERSTELLUNGSVERFAHREN UND VERWENDUNG
MÉLANGES RÉACTIFS POUR LA FORMATION DE MOUSSE DE POLYURÉTHANE, MOUSSE DE POLYURÉTHANE QUI EN RÉSULTE, SON PROCÉDÉ DE PRÉPARATION ET SON UTILISATION

(30) Priority: 16.12.2022 US 202263433045 P; 13.02.2023 US 202363484624 P
(43) Date of publication of application: 22.10.2025
(73) Proprietor: Covestro LLC, Pittsburgh, PA 15205-9741 (US)
(72) Inventor: PARKS, Brandon, Pittsburgh, Pennsylvania 15205 (US); APRAHAMIAN, Steve, Pittsburgh, Pennsylvania 15205 (US); MANN, David, Pittsburgh, Pennsylvania 15205 (US)
(74) Representative: Levpat
(86) International application number: PCT/US2023/081132
(87) International publication number: WO 2024/129344

(56) References cited:
- US-A1- 2011 077 315
- US-A1- 2021 102 040

## Description

### FIELD

The present invention relates to foam-forming reaction mixtures, rigid polyurethane ("PUR") foams formed therefrom, processes for producing such foams and to the use of such foams. As used herein, the term rigid PUR foam or PUR foam encompasses polyurethane foams which also include polyisocyanurate groups.

### BACKGROUND

Rigid PUR foams have excellent thermal and mechanical properties and are produced by reacting polyisocyanates with compounds having at least two hydrogen atoms that are reactive toward isocyanate groups, such as polyols, in the presence of blowing agents and other additives, such as catalysts and surfactants. The foams are used to produce components which insulate against heat and cold, such as refrigeration appliances (among other things) and can be produced either by continuous or discontinuous processes. A discontinuous process is typically used to produce insulated refrigeration appliances.

In the discontinuous process, an important requirement is reducing the demolding time during production. The properties of rigid PUR foams, including demolding time, are often set by modification of the polyol component. High hydroxyl numbers and functionalities of the polyol component typically have a favorable influence on demolding properties, but since they are highly viscous, they can be used only in limited amounts.
US 2021/102040 A1 discloses polyol premixes and thermally insulating rigid polyurethane foams, such as those that can be used as a thermal insulation medium in the construction of refrigerated storage devices in which a polymer polyol having a OH number of greater than 260 mg KOH/g is utilized.

Recently, it was discovered, as disclosed in US 2019/0284363A1, that when using polymeric MDI in a very particular viscosity range in combination with a specific polyol component in the correct mixing ratio, it was possible to obtain rigid PUR foams which have equally good flow properties and mechanical data compared to systems using polymeric MDI having a viscosity of not more than about 200 mPa·s (25°C) that are customarily used or as compared to systems disclosed in the prior art, but display improved demoldability in a discontinuous process.

Nevertheless, it would be desirable to provide foam-forming reaction mixtures, using such polymeric MDI, that can exhibit even further improved demoldability in a discontinuous production process, without detrimentally impacting other important foam properties such as, for example, thermal insulation properties and dimensionally stability.

The inventions described in this specification were made in view of the foregoing.

### SUMMARY

In some respects, this specification relates to foam-forming reaction mixtures. These reaction mixtures comprise: (a) a polyol blend; (b) a blowing agent composition; (c) a catalyst; (d) a surfactant; and (e) a polyisocyanate. The polyol blend comprises (i) a saccharide-initiated polyether polyol having a hydroxyl number of 400 to 600 mg KOH/g and a functionality of 4.0 to 6.0, which is present in an amount of at least 40% by weight, based on total weight of polyol; and (ii) an aromatic amine-initiated polyether polyol having a hydroxyl number of 100 to 550 mg KOH/g and a functionality of 1.5 to 5.0, which is present in an amount of at least 30% by weight, based on total weight of polyol, with the proviso that the polyol blend contains less than 3% by weight, based on total weight of polyol, of a polyol having a hydroxyl number of 15 to 300 mg/KOH g and a functionality of 1.5 to 4.0. The blowing agent composition comprises (i) a physical blowing agent, and (ii) a chemical blowing agent. The polyisocyanate comprises at least 85% by weight, based on total weight of polyisocyanate, of a polymeric MDI having an NCO content of 29.0% to 32.0% by weight and a viscosity at 25°C of 300 to 750 mPa·s, measured according to EN ISO 3219, October 1994, wherein the polymeric MDI comprises, based on total weight of the polymeric MDI, 25% to 40% by weight of monomeric MDI.

In other respects, this specification relates to processes for making a molded rigid foam. These processes comprise: (a) depositing a foam-forming reaction mixture into a mold, and (b) allowing the foam-forming reaction mixture to react in the mold to form the mold rigid foam. In these processes, the foam-forming reaction mixture comprises: (1) a polyol blend; (2) a blowing agent composition; (3) a catalyst; (4) a surfactant; and (5) a polyisocyanate. The polyol blend comprises (i) a saccharide-initiated polyether polyol having a hydroxyl number of 400 to 600 mg KOH/g and a functionality of 4.0 to 6.0, which is present in an amount of at least 40% by weight, based on total weight of polyol; and (ii) an aromatic amine-initiated polyether polyol having a hydroxyl number of 100 to 550 mg KOH/g and a functionality of 1.5 to 5.0, which is present in an amount of at least 30% by weight, based on total weight of polyol, with the proviso that the polyol blend contains less than 3% by weight, based on total weight of polyol, of a polyol having a hydroxyl number of 15 to 300 mg/KOH g and a functionality of 1.5 to 4.0. The blowing agent composition comprises (i) a physical blowing agent, and (ii) a chemical blowing agent. The polyisocyanate comprises at least 85% by weight, based on total weight of polyisocyanate, of a polymeric MDI having an NCO content of 29.0% to 32.0% by weight and a viscosity at 25°C of 300 to 750 mPa·s, measured according to EN ISO 3219, October 1994, wherein the polymeric MDI comprises, based on total weight of the polymeric MDI, 25% to 40% by weight of monomeric MDI.

This specification also relates to, among other things, rigid foams produced from such foam-forming reaction mixtures and by such processes, as well as to composite elements comprising such rigid foams, including insulated refrigeration appliances comprising such foams.

### DETAILED DESCRIPTION

Various implementations are described and illustrated in this specification to provide an overall understanding of the structure, function, properties, and use of the disclosed inventions. It is understood that the various implementations described and illustrated in this specification are non-limiting and non-exhaustive. Thus, the invention is not limited by the description of the various non-limiting and non-exhaustive implementations disclosed in this specification, except as it may be limited by claims. The features and characteristics described in connection with various implementations may be combined with the features and characteristics of other implementations. Such modifications and variations are intended to be included within the scope of this specification. As such, the claims may be amended to recite any features or characteristics expressly or inherently described in, or otherwise expressly or inherently supported by, this specification. Further, Applicant(s) reserve the right to amend the claims to affirmatively disclaim features or characteristics that may be present in the prior art. The various implementations disclosed and described in this specification can comprise, consist of, or consist essentially of the features and characteristics as variously described herein.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein. Accordingly, Applicant(s) reserves the right to amend this specification, including the claims, to expressly recite any sub-range subsumed within the ranges expressly recited herein.

The grammatical articles "one", "a", "an", and "the", as used in this specification, are intended to include "at least one" or "one or more", unless otherwise indicated. Thus, the articles are used in this specification to refer to one or more than one (i.e., to "at least one") of the grammatical objects of the article. By way of example, "a component" means one or more components, and thus, possibly, more than one component is contemplated and may be employed or used in an implementation of the described implementations. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the -OH functional material that is being described. In the production of polyurethane foams, the hydroxyl groups react with isocyanate groups, -NCO, that are attached to the isocyanate compound. The term "hydroxyl number" refers to the number of reactive hydroxyl groups available for reaction and is expressed as the number of milligrams of potassium hydroxide equivalent to the hydroxyl content of one gram of the polyol (ASTM D4274-16). The term "equivalent weight" refers to the weight of a compound divided by its valence. For a polyol, the equivalent weight is the weight of the polyol that will combine with an isocyanate group and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

As indicated, certain implementations of the present specification relate to foam-forming reaction mixtures useful in the production of rigid foams. A rigid foam is characterized as having a ratio of compressive strength to tensile strength of at least 0.5:1, elongation of less than 10%, as well as a low recovery rate from distortion and a low elastic limit, as described in in "Polyurethanes: Chemistry and Technology, Part II Technology," J. H. Saunders & K. C. Frisch, Interscience Publishers, 1964, page 239.

The rigid foams of this specification are the reaction product of a foam-forming reaction mixture that includes a polyisocyanate. As used herein, the term "polyisocyanate" encompasses diisocyanates, as well as polyisocyanates of greater functionality than 2.0. More specifically, the polyisocyanate comprises polymeric MDI. As used herein, "polymeric MDI" refers to a mixture of the isomers of diphenylmethane diisocyanate ("monomeric MDI" or "mMDI") and oligomers thereof, *i.e.,* the homologues and isomers of MDI having more than two rings, which have at least three aromatic rings and a functionality of at least three ("oligomeric MDI"). "Polymeric MDI", as used herein, is to be distinguished from modified isocyanates or isocyanate-terminated prepolymers made from monomeric MDI and/or polymeric MDI.

The polymeric MDI present in the foam-forming reaction mixtures of this specification has a NCO content of 29.0 to 32.0% by weight, based on the total weight of the polymeric MDI and a viscosity at 25°C (measured according to EN ISO 3219, October 1994) of 300 to 750 mPa·s, such as 320 to 650 mPa·s, 350 to 550 mPa·s, or in some cases, 350 to 500 mPa·s.

In addition, the polymeric MDI comprises, based on its total weight, 25% to 40% by weight of monomeric MDI. In some implementations, the polymeric MDI comprises 25% to 40% by weight of monomeric MDI and 50% to 75% by weight of oligomeric MDI, based on the total weight of polymeric MDI.

In the foam-forming reaction mixtures of this specification, the polymeric MDI is present in an amount of least 85% by weight, such as at least 90% by weight, at least 95% by weight, or at least 99% by weight, based on total weight of polyisocyanate.

Apart from the polymeric MDI, the foam-forming reaction mixture may include other polyisocyanates, such as any of the aliphatic, cycloaliphatic, and aromatic polyisocyanates known for the production of polyurethanes, such as, for example, tolylene diisocyanate (TDI). In certain implementations, such other polyisocyanates are present in an amount of up to 15% by weight, such as up to 10% by weight, or up to 5% by weight, based on the total weight of polyisocyanate. In other implementations, however, the polyisocyanate consists, apart from industrially unavoidable traces of impurities, entirely of polymeric MDI.

The foam-forming reaction mixtures of this specification comprise a polyol blend. The polyol blend comprises (i) a saccharide-initiated polyether polyol having a hydroxyl number of 400 to 600 mg KOH/g and a functionality of 4.0 to 6.0, which is present in an amount of at least 40% by weight, based on total weight of polyol; and (ii) an aromatic amine-initiated polyether polyol having a hydroxyl number of 100 to 550 mg KOH/g and a functionality of 1.5 to 5.0, which is present in an amount of at least 30% by weight, based on total weight of polyol.

As indicated, the polyol blend comprises a saccharide-initiated polyether polyol. As used herein, "saccharide-initiated polyether polyol" refers to a polyether polyol that is the reaction product of an H-functional starter comprising saccharide, such as sucrose, with alkylene oxide in the presence of a catalyst, such as an alkali metal-containing catalyst. Examples of suitable alkylene oxides include ethylene oxide, propylene oxide, butylene oxide, styrene oxide, epichlorohydrin, or a mixture of any two or more thereof. Some examples of suitable saccharide initiators are sucrose, sorbitol, maltitol, etc. as well as other mono-saccharides, di-saccharides, tri-saccharides and polysaccharides. Other initiator compounds are often used in combination with the saccharide initiator to prepare the saccharide-initiated polyether polyol. Saccharides can be co-initiated with for example, compounds such as water, propylene glycol, glycerin, ethylene glycol, ethanol amines, diethylene glycol, or a mixture of any two or more thereof. As will be appreciated, it is possible to use a wide variety of individual initiator compounds in combination with saccharide initiator.

In some implementations, saccharide is the predominant H-functional starter used to produce the saccharide-initiated polyether polyol. This means that, in these implementations, saccharide is present in an amount of more than 50% by weight, such as at least 70% by weight or at least 80% by weight, based on the total weight of H-functional starter used to produce the saccharide-initiated polyether polyol.

In some implementations, propylene oxide is the primary or essentially sole alkylene oxide used to prepare the saccharide-initiated polyether polyol. This means that, in these implementations, propylene oxide is used in an amount of more than 50% by weight, such as at least 60% by weight, at least 70% by weight, at least 80% by weight, at least 90% by weight, or 100% by weight, based on the total weight of alkylene oxide used to prepare the saccharide-initiated polyether polyol. In some implementations, ethylene oxide is employed in a relatively small amount. Thus, in these implementations, ethylene oxide is present in an amount of no more than 50% by weight, such as no more than 40% by weight, or, in some cases, no more than 30% by weight, based on the total weight of alkylene oxide used to prepare that saccharide-initiated polyether polyol.

In some implementations, the saccharide-initiated polyether polyol has an OH number of 400 to 600 mg KOH/g, such as 400 to 500 mg KOH/g, or, in some cases, 450 to 500 mg KOH/g, and a functionality of 4.0 to 6.0, such as 4.8 to 5.6, 5.0 to 5.4, or 5.1 to 5.3. In addition, in some implementations, the saccharide-initiated polyether polyol has a content of -C₂H₄O- units of less than 50% by weight, such as less than 40% by weight, or no more than 30% by weight, based on total weight of the saccharide-initiated polyether polyol.

In the foam-forming reaction mixtures of this specification, the saccharide-initiated polyether polyol is present in an amount of at least 40% by weight, based on the total weight of polyol that is present. More specifically, in some implementations, the saccharide-initiated polyol is present in an amount of 40 to 60% by weight, such as 40 to 50% by weight, based on the total weight of polyol that is present.

The foam-forming reaction mixtures of this specification also comprise an aromatic amine-initiated polyether polyol. As used herein, "aromatic amine-initiated polyether polyol" refers to a polyether polyol that is the reaction product of an H-functional starter comprising an aromatic amine, such as toluenediamine ("TDA"), and alkylene oxide. Such aromatic amine-initiated polyether polyols have a functionality of 1.5 to 5.0, such as 2.0 to 5.0, 3.0 to 4.5, 3.5 to 4.5, 3.8 to 4.2, or 3.8 to 4.0, and a hydroxyl number of 100 to 550 mg KOH/g, such as 300 to 500 mg KOH/g, 350 to 450 mg KOH/g, or 380 to 420 mg KOH/g. In some embodiments, the aromatic amine-initiated polyether polyol has a viscosity at 25°C of at least 5000 mPas, such as 5000 to 50,000 mPas, 5000 to 30,000 mPas, 10,000 to 30,000 mPas or 20,000 to 30,000 mPas. In some implementations, the aromatic amine-initiated polyether polyol has a free aromatic amine content of no more than 1500 ppm, in some cases no more than 1000 ppm, as measured by GC-FID using a RXT-200 column.

In some implementations, the aromatic amine-initiated polyether polyol comprises the alkoxylation reaction product of a polyol starter consisting essentially of an aromatic diamine with an alkylene oxide consisting essentially of propylene oxide. More specifically, in some implementations, the aromatic diamine starter is used in an amount of at least 95% by weight, at least 98% by weight or, in yet other cases, at least 99% by weight, based on the total weight of polyol starter used to produce the polyether polyol.

Suitable aromatic diamine starters can be monomeric or polymeric and can have primary amine and/or secondary amine functional groups. For example, a primary amine, R-NH₂ reacts with epoxides to give two hydroxyl groups. For example, RNH₂ can react with 2 moles of propylene oxide to yield HO-CH₂CH₂CH₂-NR-CH₂CH₂CH₂-OH. Therefore, an amine functionality of 1 in this case gives a polyol functionality of 2 and a diamine with 2 primary amine groups gives a polyol functionality of 4. Examples of suitable aromatic amines include, but are not limited to, crude toluene diamine obtained by the nitration of toluene followed by reduction, 2,3-toluene diamine, 3,4-toluene diamine, 2,4-toluene diamine, and 2,6-toluene diamine or mixtures thereof, 4,4'-methylene dianiline, methylene-bridged polyphenyl polyamines composed of isomers of methylene dianilines and triamines, and or polyamines of higher molecular weight prepared by reacting aniline with formaldehyde, as well as mixtures of any two or more of the foregoing.

If desired, in addition to the aromatic diamine starter, a relatively small amount of other H-functional starters may be used. In some implementations, one or more additional hydroxyl and/or amine functional starters is employed. In some implementations, for example, such additional starter(s) may comprise trimethylolethane, trimethylolpropane, glycerol, pentaerythritol, 4,4'-dihydroxydiphenyl-propane, sorbitol, sucrose, ethylenediamine, monoethanolamine, diethanolamine, methyl amine, ethylene diamine, diethylene triamine, triethylene tetramine, triethanolamine, ethylene glycol, 1,2- or 1,3-propanediol, 1,2-, 1,3- or 1,4-butanediol, 1,5-heptanediol, 1,6-hexanediol, 1,4-cyclohexanedimethanol, 1,4-cyclohexanedimethanol, 1,3-cyclohexanedimethanol, 1,2-cyclohexanedimethanol, tricyclodecanedimethanol, adamantanediol, pentacyclopentadecanedimethanol, glycerin, pentaerythritol, 4,4'-dihydroxy-diphenylpropane, ammonia, aniline, ethanolamine, triethanolamine, and ethylene diamine, or a mixture of any two or more of the foregoing. Oligomeric and/or polymeric polyols, such as polyether polyols, are also suitable starters, as are Mannich reaction products of phenol or substituted phenols with alkanol amines and formaldehyde or paraformaldehyde.

In some implementations, the propylene oxide is used in an amount of at least 95% by weight, or, in yet other cases, at least 99% by weight, based on the total weight of alkylene oxide used to produce the polyether polyol.

Thus, if desired, in addition to propylene oxide, minor amounts of other alkylene oxides may be used. Such other alkylene oxides may include, for example, ethylene oxide, butylene oxide, or styrene oxide, or a mixture of any two or more thereof. If more than one alkylene oxide, is used, they can be used sequentially or simultaneously.

The aromatic amine-initiated polyol may be prepared by any of a variety of processes. In some implementations, however, the aromatic amine-initiated polyether polyol is produced by a process comprising a first alkoxylation step ("PO1") comprising reacting an alkylene oxide consisting essentially of propylene oxide with a starter consisting essentially of aromatic diamine at a molar ratio of propylene oxide to aromatic diamine of 1.4:1 to 2.0:1 to form an alkoxylated product. Thus, in carrying out the first alkoxylation step, one mole of aromatic diamine, such as one or more isomers of toluene diamine, is reacted with from 1.4 to 2.0, 1.4 to 1.8 or, in some cases, 1.5 to 1.8 moles of propylene oxide. The reaction between propylene oxide and the aromatic diamine is carried out at a temperature in the range of, for example, 90°C to 180°C, such as 120°C to 150°C, or, in some cases 120°C to 130°C, at atmospheric pressure or moderately elevated pressure. Of course, lower temperatures could be used, but the reaction time would be extended. The alkylene oxide is often added, either continuously or intermittently, at such a rate that the reaction temperature and pressure can be maintained at the desired levels.

The first alkoxylation step is typically conducted in the substantial or complete absence of any added catalyst.

Although a reaction diluent is usually not necessary in carrying out the above alkoxylation, an inert liquid diluent can be present in the reaction mixture, if desired, to aid in the dispersion of the alkylene oxide in the amine mixture. Examples of suitable diluents include monochlorobenzene, N,N-dimethylformamide, toluene, xylene, and the like.

The reaction product resulting from the first alkoxylation step can be purified, if desired, but is often employed, without further treatment, in a second alkoxylation step. If purification of the alkoxylated reaction product is desired before use of the product in the second alkoxylation, the purification can be effected using known procedures. For example, an excess of alkylene oxide, if present, can be removed by entrainment in a stream of inert gas such as nitrogen, argon, or xenon; if an inert organic solvent has been employed as reaction solvent, this can be removed by distillation under reduced pressure and the residue from such treatment or treatments can be purified by chromatography, countercurrent distillation and the like.

In this implementation of the process for producing the aromatic amine-initiated polyether polyol, the alkoxylated product from the first alkoxylation step described above is reacted, in a second alkoxylation step ("PO2"), with an alkylene oxide consisting essentially of propylene oxide, in the presence of an added catalyst, until the ratio of the total moles of propylene oxide added in the process to the moles of aromatic diamine added in the process is 4:1 to 9:1, such as 6:1 to 8:1 or 6:1 to 7:1, and until a polyether polyol having the desired hydroxyl number is obtained. In some implementation, the second alkoxylation step is carried out at a temperature of 90°C to 180°C, such as 120°C to 150°C, at atmospheric pressure or moderately elevated pressure in the presence of the added catalyst. Lower reaction temperature could be employed with an increase in reaction times.

As indicated, the PO2 step may be conducted in the presence of added catalyst. Examples of suitable catalysts are tertiary amines, such as pyridine and triethylamine, alkali metals, such as sodium, potassium, and lithium, and alkali metal hydroxides, such as sodium hydroxide, potassium hydroxide, and lithium hydroxide. The amount of added alkoxylation catalyst employed may, for example, be 0.0001 to 1, such as 0.01 to 0.5, part by weight of catalyst per 100 parts by weight of polyether polyol produced.

In some implementations of this process for producing an aromatic amine-initiated polyether polyol, PO2 is at least partially carried out at a temperature higher than PO1. For example, in some implementations, PO2 is at least partially conducted at a temperature that is at least 20°C higher than PO1, such as at least 30°C higher than PO1. More specifically, in some implementations, PO2 is conducted initially (such as during or throughout propylene oxide addition) at or near the temperature of PO1 (such as within 20°C, within 10°C or within 5°C as PO1) and then increased during a post-reaction period after PO addition. The temperature during PO2 can be increased during and/or after the alkylene oxide addition of PO2. This temperature increase can enable production of polyether polyols having a desirable viscosity and measured OH number, all at a relatively low cycle time. For example, in some implementations, PO2 (which encompasses an alkylene oxide addition period and subsequent "post-reaction" period to allow the alkylene oxide to react to form the resulting polyether polyol of desired measured OH number) is completed in no more than 6 hours, in some cases, no more than 5 hours or, in some cases, no more than 4 hours.

After PO2, the resultant reaction mixture containing the added alkaline catalyst, such as 0.1% to 1.0% as KOH, may be neutralized. In certain implementations, the reaction mixture is neutralized with a hydroxy-carboxylic acid, though, as will be appreciated, other acids, such as sulfuric acid or phosphoric acid, could be used if desired. Neutralization may be accomplished by mixing the hydroxy-carboxylic acid and reaction mixture at ambient conditions with stirring and need not be exact neutrality (i.e., pH=7.0). The reaction mixture may be maintained at a slight acidity or alkalinity, i.e., at a pH of 5 to 11, such as 6 to 10. The neutralized catalyst may be soluble in the polyether polyol so that the product amine-initiated polyol may be used in polyurethane foam-forming equipment without subsequent treatment and without generating large amounts of solid waste material.

In the foam-forming reaction mixtures of this specification, the aromatic amine-initiated polyether polyol is present in an amount of at least 30% by weight, based on the total weight of polyol that is present. More specifically, in some implementations, the foregoing aromatic amine-initiated polyol is present in an amount of 30 to 80% by weight, such as 30 to 60% by weight, or, in some cases, 40 to 60% by weight or 40 to 50% by weight, based on the total weight of polyol that is present.

If desired, the polyol blend may include additional compounds that contain isocyanate-reactive groups, chain extenders and/or crosslinking agents, and polyether polyols and polyester polyols not described above. Chain extenders and/or crosslinking agents include, for example, ethylene glycol, propylene glycol, butylene glycol, glycerol, diethylene glycol, dipropylene glycol, dibutylene glycol, trimethylolpropane, pentaerythritol, ethylene diamine, and diethyltoluenediamine.

For example, in some implementations, the foam-forming reaction mixture comprises an aliphatic triol-initiated polyether polyol having an OH number of 400 to 600 mg KOH/g, such as 400 to 500 mg KOH/g, 450 to 500 mg KOH/g, or 465 to 475 mg KOH/g and a functionality of from greater than 2 to 4, such as 2.5 to 3.5, or, in some cases, 3.0.

Such polyether polyols can be prepared by reacting suitable aliphatic divalent, trivalent and/or more valent alcohols, (e.g., ethanediol, propanediol-1,2 and propanediol-1,3, diethylene glycol, dipropylene glycol, butanediol-1,4, hexanediol-1,6, and glycerin), provided that at least one trivalent alcohol is used. In some embodiments, the polyvalent alcohol starter comprises or, in some cases, consists of glycerin and the alkylene oxide comprises, or, in some cases, consists of propylene oxide.

In some cases, aliphatic triol-initiated polyether polyol is present in an amount of 1 to 20% by weight, such as 5 to 15% by weight or 10 to 15% by weight, based on the total weight of polyol that is present.

Nevertheless, the foam-forming reaction mixtures of this specification contain less than 3% by weight, such as less than 2% by weight, less than 1% by weight, or less than 0.1% by weight, based on total weight of polyol (such as polyether polyol or polyester polyol), of a polyol having a hydroxyl number of 15 to 300 mg/KOH g and a functionality of 1.5 to 4.0. The substantial elimination of such a polyol is currently believed to be critical to obtaining improved demold properties of the foam-forming reaction mixture, as illustrated by the Examples. It was, however, a surprising discovery that the substantial removal of such polyol from the foam-forming reaction mixture did not result in any significant detrimental impact on the thermal insulation performance and dimensional stability of the resulting foam, as also illustrated by the Examples.

In some implementations, aromatic amine-initiated polyether polyol and saccharide-initiated polyether polyol are present in a weight ratio of at least 0.5:1, such as 0.5:1 to 1.5:1, 0.7:1 to 1.0:1, or 0.8:1 to 0.9.5:1. In certain implementations, aromatic amine-initiated polyether polyol and aliphatic triol-initiated polyether polyol are present in a weight ratio of at least 2:1, such as 2:1 to 4:1, 3:1 to 4:1 or 3:1 to 3.5:1. In certain implementations, saccharide-initiated polyether polyol and aliphatic triol-initiated polyether polyol are present in a weight ratio of at least 2:1, such as 3:1 to 5:1, 3.5:1 to 4.5:1 or 3.8:1 to 4.2:1.

In some embodiments, the polyol blend has a weighted average functionality of from 3 to 5, such as 4.0 to 5.0 or 4.2 to 4.6, and/or a weighted average hydroxyl number of from 300 to 500 mg KOH/g, such as 400 to 500 mg KOH/g, or 400 to 450 mg KOH/g. In some cases, the polyol blend is present in the foam-forming reaction mixture in an amount of at least 70% by weight, such as 70 to 90% by weight or 75 to 85% by weight, based on total weight of the foam-forming reaction mixture except for the weight of the polyisocyanate.

In some implementations, for at least the saccharide-initiated polyether polyol, which may be produced using an alkali metal-containing catalyst, such as an alkali metal hydroxide, the catalyst is neutralized catalyst using, for example, sulfuric acid and/or phosphoric acid, rather than with a hydroxy-carboxylic acid comprising lactic acid. Thus, such a neutralization is conducted in the absence of such a hydroxy-carboxylic acid. Indeed, it was observed that demold properties of the foam-forming reaction mixture could be further improved (without detrimental impact on thermal insulation performance or dimensional stability of the resulting foam) through use of a saccharide-initiated polyether polyol produced using an alkali metal-containing catalyst, such as an alkali metal hydroxide, in which the catalyst is neutralized in the absence of such a hydroxy-carboxylic acid, particularly lactic acid.

Further, in some implementations, the polyol blend does not include any filled polyol. As will be appreciated, a "filled polyol" is a dispersion of polymer particles in a base polyol. Examples of filled polyols, any or all of which are excluded from use in the some implementations of the polyol blends employed in the inventions disclosed herein, are "polymer polyols", in which the polymer particles comprise a polymer comprising the free radical polymerization reaction product of an ethylenically unsaturated compound, "PIPA polyols", in which the polymer particles comprise a polyisocyanate polyaddition polymer comprising the reaction product of a polymerizable composition comprising an isocyanate and an alkanolamine, and "PHD polyols" in which the polymer particles comprise a polyhydrazodiconamide comprising the reaction product of a reaction mixture comprising an isocyanate and a diamine and/or a hydrazine.

The foam-forming reaction mixtures of this specification comprise a blowing agent composition.

The blowing agent composition comprises a physical blowing agent. As used herein, "physical blowing agents" refers to compounds which are readily volatile because of their physical properties and do not react with the isocyanate component. Suitable physical blowing agents include, for example, hydrocarbons, such as n-pentane, isopentane, cyclopentane, butane, and isobutane, ethers, such as methylal, halogenated ethers, perfluorinated hydrocarbons having from 1 to 8 carbon atoms, such as perfluorohexane, as well as mixtures of these with one another. The use of (hydro)fluorinated olefins, such as HFO 1233zd(E) (trans-1-chloro-3,3,3-trifluoro-1-propene) or HFO 1336mzz(Z) (cis-1,1,1,4,4,4-hexafluoro-2-butene), or additives such as FA 188 from 3M (1,1,1,2,3,4,5,5,5-nonafluoro-4-(trifluoromethyl)pent-2-ene) is also suitable. In some implementations, the physical blowing agent comprises a pentane isomer or a mixture of various pentane isomers, such as cyclopentane. In some cases, hydrocarbons, such as the various pentane isomers, can be combined with perfluorinated hydrocarbons.

In some implementations, the physical blowing agent, such as cyclopentane, is present in an amount of at least 10% by weight, such as 10 to 15% by weight, based on total weight of the foam-forming reaction mixture except for the weight of the polyisocyanate.

The blowing agent composition also comprises a chemical blowing agent, such as water, which reacts with isocyanate to form carbon dioxide. In some cases, water is utilized in an amount of at least 1.70% by weight, such as 1.70 to 5.0% by weight, 2.0 to 4.0% by weight, 2.0 to 3.0% by weight, or 2.1 to 2.5% by weight, based on total weight of the foam-forming reaction mixture except for the weight of the polyisocyanate.

In some implementations, physical blowing agent and chemical blowing agent are present in a relative ratio, by weight, of at least 4:1, such as 4:1 to 50:1, 4:1 to 20:1, 4:1 to 10:1 or 5:1 to 8:1.

The foam-forming reaction mixtures of this specification also comprise a surfactant. Suitable surfactants include, for example, organosilicon compounds, such as polysiloxane-polyalkyene-block copolymers, such as a polyether-modified polysiloxane. Other possible surfactants include polyethylene glycol ethers of long chain alcohols, tertiary amine or alkanolamine salts of long chain alkyl acid sulfate esters, alkylsulfonic esters, or alkylarylsulfonic acids. In some implementations, surfactant is present in an amount of 0.2 to 5.0% by weight, such as 1 to 3% by weight, based on the total weight of the polyurethane foam-forming composition except for the weight of the polyisocyanate.

In some cases, the surfactant comprises a polyether-modified polysiloxane having a hydroxyl number of at least 40 mg KOH/g, such as 40 to 150 mg KOH/g or 40 to 130 mg KOH/g.

The foam-forming reaction mixtures of this specification also include a catalyst, such as amine catalysts and trimerization catalysts. In some cases, amine catalyst is present in an amount of 0.05 to 4% by weight and the salt used as a trimerization catalyst is employed in an amount of 0.1 to 5% by weight, in each case based on total weight of the foam-forming reaction mixture except for the weight of the polyisocyanate.

Specific examples of suitable catalysts include, without limitation, triethylenediamine, N,N-dimethylcyclohexylamine, dicyclohexylmethylamine, tetramethylenediamine, 1-methyl-4-dimethylaminoethylpiperazine, triethylamine, tributylamine, dimethylbenzylamine, N,N',N"-tris(dimethylaminopropyl)hexahydrotriazine, tris(dimethylaminopropyl)amine, tris(dimethylaminomethyl)phenol, dimethylamino-propylformamide, N,N,N',N'-tetramethylethylenediamine, N,N,N',N'-tetramethylbutane-diamine, tetramethylhexanediamine, pentamethyldiethylenetriamine, pentamethyl-dipropylenetriamine, bis(dimethylaminoethyl) ether, dimethylpiperazine, 1,2 dimethyl-imidazole, 1-azabicyclo[3.3.0]octane, bis(dimethylaminopropyl)urea, N methylmorpholine, N-ethylmorpholine, sodium N-[(2-hydroxy-5-nonylphenyl)methyl]-N-methylaminoacetate, N-cyclohexylmorpholine, 2,3-dimethyl-3,4,5,6-tetrahydropyrimidine, triethanolamine, diethanolamine, triisopropanolamine, N-methyldiethanolamine, N ethyldiethanolamine, dimethylethanolamine, bis[2-(N,N-dimethylamino)ethyl] ether, if necessary (if high proportions of polyisocyanurate are wanted) together with at least one catalyst selected from the group consisting of tin(II) acetate, tin(II) octoate, tin(II) ethylhexanoate, tin(II) laurate, dibutyltin diacetate, dibutyltin dilaurate, dibutyltin maleate, dioctyltin diacetate, tris(N,N-dimethylaminopropyl)-s-hexahydrotriazine, tetramethylammonium hydroxide, sodium acetate, sodium octoate, potassium acetate, potassium octoate, sodium hydroxide.

In some implementations, the catalyst comprises one or more of potassium acetate, potassium octoate, pentamethyldiethylenetriamine, N,N',N"-tris(dimethylaminopropyl)hexahydrotriazine, tris(dimethylaminomethyl)phenol, bis[2-(N,N-dimethylamino)ethyl] ether and N,N-dimethylcyclohexylamine, such as where the catalyst comprises one or more or pentamethyldiethylenetriamine, N,N',N"-tris(dimethylaminopropyl)hexahydrotriazine and N,N-dimethylcyclohexylamine.

The foam-forming reaction mixture may, if desired, include a flame retardant, such as where flame retardant is present in the polyol component, such as in an anmount of up to 10% by weight, based on total weight of the foam-forming reaction mixture except for the weight of the polyisocyanate. Suitable flame retardants include, for example, bromineand chlorine-containing paraffins or phosphorus compounds, such as esters of orthophosphoric acid and of metaphosphoric acid, which can contain halogen. Examples are triethyl phosphate, diethyl ethanephosphonate, cresyl diphenyl phosphate, dimethyl propanephosphonate and tris(β-chloroisopropyl)phosphate. Flame retardants which are liquid at room temperature are often used. It can be advantageous to combine various flame retardants with one another.

In some implementations, this specification relates to processes for making a molded rigid foam that comprise: (a) depositing a foam-forming reaction mixture as described herein into a mold, and (b) allowing the foam-forming reaction mixture to react in the mold to form the molded rigid foam.

It has been observed that use of the foam-forming reaction mixture described herein can lead, in particular, to good dimensional accuracy (swelling behavior) of the foam during processing combined with overall very good processing properties. The swelling behavior is critical in determining the time after which a shaped body can be removed from the mold (demoldability). The rigid foams of the invention display a good property profile, in particular low thermal conductivity values.

The mold used in the processes of this specification can be a closed or open mold. Here, "open" means that at least two side walls are present. The foam obtained can be taken from the mold or remain in the mold for its final purpose. A mold by means of which one-piece insulations for refrigeration appliances are produced is particularly suitable according to the invention. The mold may be arranged such that the reaction mixture introduced into it can spread over the bottom of the mold.

The foam-forming reaction mixture can, for example, be produced by means of a conventional high-pressure mixing unit and introduced into the mold by means of a discharge tube. The mixing unit can comprise a mixing chamber into which the individual components of the reaction mixture are fed.

An example of a conventional process for producing insulation for refrigeration appliances is filling of the mold in the tub position, with the appliance lying on the rear wall being filled either from the compressor stage or the top region. Another conventional process is the "top flow" process in which the reaction mixture is introduced from the bottom into a mold and can thus spread over the bottom of the mold.

It can be advantageous to introduce the foam-forming reaction mixture into the mold under a variable injection pressure and/or in an amount which changes over time, as is described, for example, in EP 2 844 394 A. It is possible to use either one discharge tube or a plurality of discharge tubes (multipoint injection) per mold. In addition, the filling process and/or foam formation may be conducted under reduced pressure. In such a process, the reaction mixture is introduced into a foam mold, with subatmospheric pressure being generated in the foam mold before, during or after introduction of the reaction mixture.

After foam formation is complete, the mixture is cured and may be removed from the mold.

The process of the invention makes it possible to produce shaped bodies composed of rigid PUR foams discontinuously with a demolding time for the shaped bodies which is shortened compared to the standard process without their mechanical properties, such as dimensional stability, or processing properties, such as the flowability, being impaired.

This specification also relates to composite systems containing the rigid PUR foams described herein and that may be obtained by the above-described process. The composite systems are often bounded by decor layers both on the upper side and on the underside. Possible decor layers are, for example, polymers, wood and paper. Such discontinuously produced PUR composite systems may be used, for example, for industrial insulation of appliances, such as refrigerators, refrigeration chests, refrigerator-freezer combinations and boilers, insulated containers and cold boxes and also pipes. This specification, therefore, also relates to any such an appliance comprising a rigid PUR foam as described herein, with the mold provided being, in some cases, a housing part of the refrigerator, of the freezer or of the refrigerator-freezer combination.

The non-limiting and non-exhaustive examples that follow are intended to further describe various non-limiting and non-exhaustive implementations without restricting the scope of the implementations described in this specification.

### EXAMPLES

### Examples 1-10

Foam-forming compositions were prepared using the ingredients and amounts (in parts by weight) set forth in Table 1. The following materials were used:
POLYOL 1: a polyether polyol having a hydroxyl number of 470 mg KOH/g and a functionality of 4.7, prepared by alkoxylating a mixture of sucrose and glycerin in the presence of an alkali metal catalyst, in which the alkylene oxide is 100% propylene oxide and in which the alkali metal catalyst is neutralized with lactic acid;
POLYOL 2: a polyether polyol having a hydroxyl number of 470 mg KOH/g and a functionality of 5.2, prepared by alkoxylating a mixture of sucrose, propylene glycol and water in the presence of an alkali metal catalyst, in which the alkylene oxide is 100% propylene oxide and in which the alkali metal catalyst is neutralized with sulfuric acid;
POLYOL 3: a polyether polyol having a hydroxyl number of 400 mg KOH/g and a functionality of 4, prepared by alkoxylating o-TDA in the presence of an alkali metal catalyst, in which the alkylene oxide is 100% propylene oxide and in which the alkali metal catalyst is neutralized with lactic acid;
POLYOL 4: a polyether polyol having a hydroxyl number of 360 mg KOH/g and a functionality of 4, prepared by alkoxylating o-TDA in the presence of an alkali metal catalyst, in which the alkylene oxide is 100% propylene oxide and in which the alkali metal catalyst is neutralized with lactic acid;
POLYOL 5: a polyether polyol having a hydroxyl number of 470 mg KOH/g and a functionality of 3.0, prepared by alkoxylating glycerin in the presence of an alkali metal catalyst, in which the alkylene oxide is 100% propylene oxide and in which the alkali metal catalyst is neutralized with sulfuric acid
POLYOL 6: an aromatic polyester polyol having an OH number of 240 mg KOH/g and a functionality of 2;
SURFACTANT 1: a polyorganosiloxane polyether copolymer believed to have a hydroxyl number of 123 mg KOH/g, available as Tegostab^{®} B-84205 from Evonik;
SURFACTANT 2: a polyorganosiloxane polyether copolymer believed to have a hydroxyl number of 105 mg KOH/g, available as Tegostab^{®} B-8465 from Evonik;
SURFACTANT 3: a polyorganosiloxane polyether copolymer believed to have a hydroxyl number of 110 mg KOH/g, available as Tegostab^{®} B-8499 from Evonik;
SURFACTANT 4: silicone surfactant with a hydroxyl number of 54 mg KOH/g, available as Vorasurf^{™} DC 5357 from Dow;
SURFACTANT 5: silicone surfactant with a hydroxyl number of 50 mg KOH/g, available as Vorasurf^{™} RF 5374 from Dow;
SURFACTANT 6: silicone surfactant with a hydroxyl number of 47.5 mg KOH/g, available as Vorasurf^{™} RF 5358 from Dow;
CATALYST 1: Dimethylcyclohexylamine
CATALYST 2: N,N,N',N",N"-pentamethyldiethylenetriamine;
CATALYST 3: N,N',N"-Dimethylaminopropylhexahydrotriazine;
CATALYST 4: Bis(dimethylaminomethyl)phenol;
PHYSICAL BA: cyclopentane;
ISO 1: a modified polymeric methylenediphenyl diisocyanate prepolymer, viscosity from ≥ 235 mPas to ≤ 435 mPas at 25°C, NCO content 29.8-31.2% by weight, Covestro Deutschland AG; and
ISO 2: polymeric MDI containing 35.2% by weight of diphenylmethane 4,4'-diisocyanate (mMDI), viscosity from ≥ 350 mPas to ≤ 450 mPas at 25°C, NCO content 30.0-32.0% by weight, Covestro Deutschland AG.

Foams were prepared using a A-100 or HK-1250 high-pressure foam machine. The liquid output was maintained at a constant 27 or 32 °C for the Resin and 27 or 32 °C for the Isocyanate side with an output range of 454 grams/second. Foam was shot into a 200 x 20 x 5 cm (79" x 8" x 2") mold between heated platens with a target overpack of 10% based on minimum fill density. The platens were maintained at 49°C. The foam remained in the mold and was allowed to cure for 10 minutes at 49°C before removing. A 20 cm x 20 cm x 2.5 cm (8" x 8" x 1") section of foam was sampled from the panels and used for k-factor testing according to ASTM C518. Lid opening swell was determined by foaming the aforementioned mold at an overpack level of 10% and allowing the part to demold for 1.5 or 2 minutes. After 1.5 or 2 minutes, the lid clamps were removed and the lid allowed to open based on the degree of foam swelling. The degree of swelling was measured at 30 seconds, 180 seconds, and 300 seconds after the lid clamps were removed. Jumbo tool demold was determined by foaming a 70 cm x 40 cm x 9 cm closed mold via a shot port at a mold temperature of 45°C with an amount of foam to achieve a foam density of either 33.6 or 36.8 kg/m³ (2.10 or 2.30 pcf). After the foam was dispensed, the shot port was closed with a cork and the foam allowed to cure for the specified amount of time (1.5, 2, 3, or 4 minutes). After the specified demold time, the mold lid was opened and the part removed and allowed to rest overnight. After 24 hours, the thickness of the part was measured at the centermost point to determine the degree of foam swelling.

Results are set forth in Table 1. Examples 9-13 are inventive examples and Examples 1-8 are comparative examples.

**Table 1**

| Ingredient | | 1 | 2 | 3 | 4 | 5 | 6 | 7 |
|---|---|---|---|---|---|---|---|---|
| POLYOL 1 | | 40.48 | 40.48 | 37.84 | 42.20 | 42.02 | 42.85 | 42.60 |
| POLYOL 2 | | -- | -- | -- | -- | -- | -- | -- |
| POLYOL 3 | | -- | -- | 34.95 | 30.07 | 29.94 | 30.53 | 30.35 |
| POLYOL 4 | | 32.38 | 32.38 | -- | -- | -- | -- | -- |
| POLYOL 5 | | -- | -- | -- | -- | -- | -- | -- |
| POLYOL 6 | | 8.09 | 8.09 | 9.93 | 9.86 | 9.82 | 10.01 | 9.96 |
| SURFACTANT 1 | | -- | -- | -- | -- | -- | -- | -- |
| SURFACTANT 2 | | 2.48 | 2.48 | | 2.46 | 2.45 | 2.45 | 2.45 |
| SURFACTANT 3 | | -- | -- | 2.50 | -- | -- | -- | -- |
| SURFACTANT 4 | | -- | -- | -- | -- | -- | -- | -- |
| SURFACTANT 5 | | -- | -- | -- | -- | -- | -- | -- |
| SURFACTANT 6 | | -- | -- | -- | -- | -- | -- | -- |
| CATALYST 1 | | -- | -- | 0.58 | 0.56 | 0.78 | 0.77 | 0.80 |
| CATALYST 2 | | 1.12 | 1.12 | 0.25 | 0.24 | 0.33 | 0.48 | 0.50 |
| CATALYST 3 | | 0.56 | 0.56 | 0.30 | 0.28 | 0.39 | 0.19 | 0.20 |
| CATALYST 4 | | -- | -- | -- | -- | -- | -- | -- |
| Water | | 1.64 | 1.64 | 1.65 | 1.83 | 1.82 | 1.87 | 1.93 |
| PHYSICAL BA | | 13.25 | 13.25 | 12.00 | 12.50 | 12.45 | 10.85 | 11.21 |
| ISOCYANATE | | ISO 1 | ISO 2 | ISO 1 | ISO 2 | ISO 2 | ISO 2 | ISO 2 |
| Index | | 1.34 | 1.38 | 1.10 | 1.11 | 1.11 | 1.20 | 1.20 |
| Ratio | | 140 | 140 | 120 | 123 | 123 | 135 | 136 |
| Resin Temperature (°F) | | 90 | 90 | 80 | 90 | 90 | 90 | 90 |
| Isocyanate Temperature (°F) | | 90 | 90 | 80 | 90 | 90 | 90 | 90 |
| Reactivity | Cream (s) | 2 | 2 | Froth | 7 | Froth | 3 | 3 |
| | Gel (s) | 25 | 26 | 41 | 35 | 28 | 32 | 29 |
| | Free-Rise Density (pcf) | 1.42 | 1.49 | 1.41 | 1.31 | 1.31 | 1.53 | 1.50 |
| Bosch Min. Fill Density (pcf) | | 2.07 | 2.13 | 2.07 | 2.00 | 1.96 | 2.29 | 2.16 |
| Packed Density (10%, pcf) | | 2.28 | 2.35 | 2.29 | 2.20 | 2.17 | 2.53 | 2.37 |
| Core Density (pcf) | | 2.01 | 2.06 | 1.98 | 1.92 | 1.90 | 2.22 | 2.06 |
| Overall vs Core Density Ratio | | 1.13 | 1.14 | 1.16 | 1.15 | 1.14 | 1.14 | 1.15 |
| Closed Cell Content (%) | | 92.3 | 92.8 | 93.0 | 91.1 | 91.5 | 91.8 | 92.2 |
| k-Factor | 35 °F | 0.130 | 0.129 | 0.127 | 0.128 | 0.127 | 0.134 | 0.134 |
| | 75 °F | 0.141 | 0.139 | 0.137 | 0.138 | 0.137 | 0.145 | 0.146 |
| Compressive Strength (psi) | + | 23.8 | 26.4 | 21.0 | 21.1 | 20.6 | 28.9 | 25.4 |
| | - | 37.9 | 42.0 | 38.1 | 36.0 | 36.2 | 45.8 | 44.0 |
| Dimensional Stability | 1 Day @ - 30 °C | 0.0 | 0.0 | 0.3 | -0.1 | 0.1 | -0.2 | -0.1 |
| | 7 Days @ -30 °C | 0.1 | 0.0 | 0.1 | -0.2 | -0.3 | -0.3 | -0.2 |
| | 1 Day @ 70 °C | -0.5 | -0.5 | -0.2 | -0.3 | 0.6 | -0.8 | -0.5 |
| | 7 Days @ 70 °C | 0.2 | -0.1 | 0.5 | 0.0 | 0.6 | -0.3 | -0.5 |
| Lid Opening @ 10% Overpack; 1.5 min Demold Time (in) | 0.5 | -- | -- | 0.636 | 0.319 | 0.293 | 0.334 | 0.308 |
| | 3.0 | -- | -- | 0.581 | 0.278 | 0.264 | 0.302 | 0.282 |
| | 5.0 | -- | -- | 0.564 | 0.261 | 0.253 | 0.288 | 0.270 |
| Lid Opening @ 10% Overpack; 2 min Demold Time (in) | 0.5 | 0.116 | 0.102 | 0.311 | 0.213 | 0.149 | 0.157 | 0.151 |
| | 3.0 | 0.103 | 0.089 | 0.282 | 0.191 | 0.128 | 0.144 | 0.132 |
| | 5.0 | 0.096 | 0.081 | 0.271 | 0.178 | 0.118 | 0.135 | 0.123 |
| Jumbo Tool Swell @ 2.10 pcf (mm) After 24 h | 1.5 | 7.7 | 5.6 | -- | -- | -- | -- | 6.0 |
| | 2.0 | 6.2 | 4.5 | -- | -- | -- | -- | 3.4 |
| | 3.0 | 4.8 | 3.5 | -- | -- | -- | -- | 1.8 |
| | 4.0 | 2.8 | 2.1 | -- | -- | -- | -- | 1.1 |
| Jumbo Tool Swell @ 2.30 pcf (mm) After 24 h | 1.5 | 9.6 | 8.0 | -- | -- | -- | -- | 8.2 |
| | 2.0 | 8.7 | 6.7 | -- | -- | -- | -- | 6.7 |
| | 3.0 | 6.7 | 5.2 | -- | -- | -- | -- | 4.5 |
| | 4.0 | 4.9 | 3.6 | -- | -- | -- | -- | 3.9 |

**Table 1 (continued)**

| Ingredient | | 8 | 9 | 10 | 11 | 12 | 13 |
|---|---|---|---|---|---|---|---|
| POLYOL 1 | | 42.20 | -- | -- | -- | -- | -- |
| POLYOL 2 | | -- | 37.37 | 38.23 | 38.23 | 38.23 | 38.23 |
| POLYOL 3 | | 30.07 | 31.81 | 32.55 | 32.55 | 32.55 | 32.55 |
| POLYOL 4 | | -- | -- | -- | -- | -- | -- |
| POLYOL 5 | | -- | 9.34 | 9.56 | 9.56 | 9.56 | 9.56 |
| POLYOL 6 | | 9.87 | -- | -- | -- | -- | -- |
| SURFACTANT 1 | | -- | 2.60 | 2.66 | -- | -- | -- |
| SURFACTANT 2 | | 2.60 | -- | -- | -- | -- | -- |
| SURFACTANT 3 | | -- | -- | -- | -- | -- | -- |
| SURFACTANT 4 | | -- | -- | -- | 2.66 | -- | -- |
| SURFACTANT 5 | | -- | -- | -- | -- | 2.66 | -- |
| SURFACTANT 6 | | -- | -- | -- | -- | -- | 2.66 |
| CATALYST 1 | | 0.99 | 1.70 | 1.74 | 1.74 | 1.74 | 1.74 |
| CATALYST 2 | | 0.62 | 1.11 | 1.14 | 1.14 | 1.14 | 1.14 |
| CATALYST 3 | | 0.25 | 0.40 | 0.41 | 0.41 | 0.41 | 0.41 |
| CATALYST 4 | | - | 0.48 | 0.49 | 0.49 | 0.49 | 0.49 |
| Water | | 1.97 | 2.15 | 2.2 | 2.2 | 2.2 | 2.2 |
| PHYSICAL BA | | 11.43 | 13.04 | 11.02 | 11.02 | 11.02 | 11.02 |
| ISOCYANATE | | ISO 2 | ISO 2 | ISO 2 | ISO 2 | ISO 2 | ISO 2 |
| Index | | 1.20 | 1.20 | 1.20 | 1.20 | 1.20 | 1.20 |
| Ratio | | 136 | 140 | 142 | 142 | 142 | 142 |
| Resin Temperature (°F) | | 90 | 90 | 90 | 90 | 90 | 90 |
| Isocyanate Temperature (°F) | | 90 | 90 | 90 | 90 | 90 | 90 |
| Reactivity | Cream (s) | 3 | 2 | 2 | 2 | 2 | 2 |
| | Gel (s) | 26 | 19 | 18 | 15 | 15 | 15 |
| | Free-Rise Density (pcf) | 1.45 | 1.35 | 1.48 | 1.48 | 1.51 | 1.46 |
| Bosch Min. Fill Density (pcf) | | 2.16 | 1.97 | 2.00 | 2.00 | 1.98 | 1.97 |
| Packed Density (10%, pcf) | | 2.37 | 2.17 | 2.21 | 2.21 | 2.19 | 2.18 |
| Core Density (pcf) | | 2.03 | 1.92 | 2.01 | 1.92 | 2.04 | 1.99 |
| Overall vs Core Density Ratio | | 1.17 | 1.13 | 1.10 | 1.15 | 1.07 | 1.10 |
| Closed Cell Content (%) | | 92.4 | 91.9 | 90.6 | 90.2 | 91.0 | 91.3 |
| k-Factor | 35 °F | 0.130 | 0.129 | 0.127 | 0.130 | 0.128 | 0.127 |
| | 75 °F | 0.140 | 0.14 | 0.138 | 0.143 | 0.139 | 0.137 |
| Compressive Strength (psi) | + | 23.1 | 21.8 | 24.3 | 24.5 | 25.3 | 23.7 |
| | = | 46.3 | 37.8 | 27.4 | 30.7 | 40.1 | 42.0 |
| Dimensional Stability | 1 Day @ - 30 °C | 0.0 | -0.2 | -0.3 | 0.1 | -0.3 | 0.1 |
| | 7 Days @ - 30 °C | -0.3 | -0.3 | 0.0 | 0.3 | -0.2 | 0.0 |
| | 1 Day @ 70 °C | -0.6 | -0.6 | -0.7 | -0.6 | -0.6 | -0.6 |
| | 7 Days @ 70 °C | -0.5 | -0.1 | 0.2 | 0.5 | 0.3 | 0.3 |
| Lid Opening @ 10% Overpack; 1.5 min Demold Time (in) | 0.5 | 0.224 | 0.061 | 0.049 | 0.047 | 0.042 | 0.051 |
| | 3.0 | 0.197 | 0.050 | 0.035 | 0.032 | 0.026 | 0.037 |
| | 5.0 | 0.186 | 0.043 | 0.029 | 0.025 | 0.022 | 0.030 |
| Lid Opening @ 10% Overpack; 2 min Demold Time (in) | 0.5 | 0.103 | 0.030 | 0.028 | 0.011 | 0.020 | 0.027 |
| | 3.0 | 0.088 | 0.018 | 0.014 | 0.011 | 0.009 | 0.015 |
| | 5.0 | 0.079 | 0.013 | 0.008 | 0.005 | 0.004 | 0.012 |
| Jumbo Tool Swell @ 2.10 pcf (mm) After 24 h | 1.5 | 6.3 | 4.4 | 3.9 | 3.6 | 3.3 | 3.3 |
| | 2.0 | 5.4 | 3.1 | 3.6 | 3.5 | 2.9 | 2.1 |
| | 3.0 | 3.7 | 2.7 | 2.3 | 1.7 | 1.8 | 2.0 |
| | 4.0 | 2.8 | 1.7 | 1.5 | 1.6 | 1.6 | 1.7 |
| Jumbo Tool Swell @ 2.30 pcf (mm) After 24 h | 1.5 | 8.2 | 5.9 | 5.0 | 5.6 | 5.0 | 6.1 |
| | 2.0 | 7.3 | 4.9 | 4.4 | 4.4 | 4.3 | 5.1 |
| | 3.0 | 5.7 | 3.9 | 3.5 | 3.1 | 3.2 | 3.4 |
| | 4.0 | 4.2 | **3.1** | 2.4 | 2.3 | 2.7 | 3.1 |

### Examples 14-20

Foam-forming compositions were prepared using the ingredients and amounts (in parts by weight) set forth in Table 2. Foam samples were prepared by hand using an air-powered mixer (~3000 rpm) and utilizing a temperature controlled mold (49 °C (120°F); dimensions of 62.5 cm x 32.5 cm x 5 cm (25" x 13" x 2")). The polyol premix and isocyanate temperatures were maintained at 20°C and all samples were demolded after 3 minutes. Minimum fill was determined by slightly overfilling the mold cavity and then removing the excess foam such that the foam weight contained in the 63.5 cm x 32.5 cm x 5 cm (25" x 13" x 2") volume could be measured. After determining the minimum fill value, foam panels were prepared to obtain a desired density approximately 8-12% over the minimum fill density. Lab swell was determined by pouring the foaming mixture into a temperature controlled mold (40 °C (104 °F); dimensions of 20 cm x 20 cm x 10 cm (8" x 8" x 4")) to achieve a desired density approximately 22-27% over the minimum fill density. Minimum fill density for this test method is determined based on the overall foam height (flow) as measured using the method described in U.S. Patent No. 10,106,641 (at col. 12, lines 22-61). After 5 minutes the sample was demolded and allowed to rest for 30 minutes under ambient conditions. After 30 minutes the thickness of the centermost point of the sample was measured to determine to degree of foam swelling. Examples 15, 17 and 20 are inventive examples and Examples 14, 16, and 18-19 are comparative examples.

**Table 2**

| Ingredient | | 14 | 15 | 16 | 17 | 18 | 19 | 20 |
|---|---|---|---|---|---|---|---|---|
| POLYOL 1 | | -- | 46.71 | 42.04 | -- | -- | -- | -- |
| POLYOL 2 | | 33.76 | -- | -- | 46.71 | 42.04 | 33.63 | 37.37 |
| POLYOL 3 | | 30.07 | 31.81 | 28.63 | 31.81 | 28.63 | 28.63 | 31.81 |
| POLYOL 5 | | 8.44 | -- | -- | -- | -- | 8.41 | 9.34 |
| POLYOL 6 | | 9.87 | -- | 7.85 | -- | 7.85 | 7.85 | -- |
| SURFACTANT 1 | | -- | 2.60 | 2.60 | 2.60 | 2.60 | 2.60 | 2.60 |
| SURFACTANT 2 | | 2.60 | -- | -- | -- | -- | -- | -- |
| SURFACTANT 3 | | -- | -- | -- | -- | -- | -- | -- |
| CATALYST 1 | | 0.99 | 1.70 | 1.70 | 1.70 | 1.70 | 1.70 | 1.70 |
| CATALYST 2 | | 0.62 | 1.11 | 1.11 | 1.11 | 1.11 | 1.11 | 1.11 |
| CATALYST 3 | | 0.25 | 0.40 | 0.40 | 0.40 | 0.40 | 0.40 | 0.40 |
| CATALYST 4 | | | 0.48 | 0.48 | 0.48 | 0.48 | 0.48 | 0.48 |
| Water | | 1.97 | 2.15 | 2.15 | 2.15 | 2.15 | 2.15 | 2.15 |
| PHYSICAL BA | | 11.43 | 13.04 | 13.04 | 13.04 | 13.04 | 13.04 | 13.04 |
| Isocyanate | | ISO 2 | ISO 2 | ISO 2 | ISO 2 | ISO 2 | ISO 2 | ISO 2 |
| Index | | 1.20 | 1.20 | 1.24 | 1.20 | 1.24 | 1.24 | 1.20 |
| Ratio | | 136 | 140 | 140 | 140 | 140 | 140 | 140 |
| Resin Temperature (°F) | | 68 | 68 | 68 | 68 | 68 | 68 | 68 |
| Isocyanate Temperature (°F) | | 68 | 68 | 68 | 68 | 68 | 68 | 68 |
| Reactivity | Cream (s) | 5 | 3 | 3 | 3 | 3 | 3 | 4 |
| | Gel (s) | 33 | 23 | 21 | 22 | 21 | 21 | 21 |
| | Free-Rise Density (pcf) | 1.55 | 1.44 | 1.43 | 1.44 | 1.46 | 1.4 | 1.43 |
| Min. Fill Density (pcf) | | -- | 1.95 | 1.90 | 1.98 | -- | 1.91 | 1.98 |
| Packed Density (10%, pcf) | | -- | 2.14 | 2.11 | 2.17 | -- | 2.09 | 2.19 |
| Core Density (pcf) | | -- | 1.92 | 1.84 | 1.93 | -- | 1.98 | 1.84 |
| Overall vs Core Density Ratio | | -- | 1.11 | 1.15 | 1.12 | -- | 1.06 | 1.19 |
| Closed Cell Content (%) | | -- | 89.0 | 89.7 | 90.5 | -- | 90.0 | 91.1 |
| k-Factor | 35 °F | -- | 0.139 | 0.137 | 0.137 | -- | 0.131 | 0.134 |
| | 75 °F | -- | 0.152 | 0.150 | 0.149 | -- | 0.144 | 0.148 |
| Compressive Strength (psi) | + | -- | 21.4 | 19.6 | 20.4 | -- | 21.2 | 22.8 |
| | = | -- | 46.0 | 44.6 | 46.1 | -- | 40.1 | 45.8 |
| Dimensional Stability | 1 Day @ - 30 °C | -- | -0.1 | -0.3 | 0.0 | -- | -0.1 | -0.2 |
| | 7 Days @ - 30 °C | -- | -0.2 | -0.4 | 0.0 | -- | -0.1 | -0.4 |
| | 1 Day @ 70 °C | -- | -0.4 | -0.3 | -0.4 | -- | -0.4 | -0.6 |
| | 7 Days @ 70 °C | | -0.7 | -0.5 | -0.7 | -- | -0.7 | -0.9 |
| Lab Swell After 30 min (in) | 2.0 | 0.25 | 0.12 | 0.25 | 0.10 | 0.16 | 0.26 | 0.12 |
| | 5.0 | 0.07 | 0.04 | 0.11 | 0.03 | 0.06 | 0.11 | 0.03 |

Although the invention has been described in detail in the foregoing for the purpose of illustration, it is to be understood that such detail is solely for that purpose and that variations can be made therein by those skilled in the art without departing from the scope of the invention except as it may be limited by the claims.

## Claims

1. A foam-forming reaction mixture comprising:
(a) a polyol blend comprising:
(i) a saccharide-initiated polyether polyol having a hydroxyl number of 400 to 600 mg KOH/g and a functionality of 4.0 to 6.0, which is present in an amount of at least 40% by weight, based on total weight of polyol, and
(ii) an aromatic amine-initiated polyether polyol having a hydroxyl number of 100 to 550 mg KOH/g and a functionality of 1.5 to 5.0, which is present in an amount of at least 30% by weight, based on total weight of polyol,
with the proviso that the polyol blend contains less than 3% by weight, based on total weight of polyol, of a polyol having a hydroxyl number of 15 to 300 mg/KOH g and a functionality of 1.5 to 4.0;
(b) a blowing agent composition comprising (i) a physical blowing agent, and (ii) a chemical blowing agent;
(c) a catalyst;
(d) a surfactant; and
(e) a polyisocyanate comprising at least 85% by weight, based on total weight of polyisocyanate, of a polymeric MDI having an NCO content of 29.0% to 32.0% by weight and a viscosity at 25°C of 300 to 750 mPa·s, measured according to EN ISO 3219, October 1994, wherein the polymeric MDI comprises, based on total weight of the polymeric MDI, 25% to 40% by weight of monomeric MDI.

2. The foam-forming reaction mixture of claim 1, wherein the polymeric MDI has a viscosity at 25°C, measured according to EN ISO 3219, October 1994, of 320 to 650 mPa·s, 350 to 550 mPa·s, or 350 to 500 mPa·s.

3. The foam-forming reaction mixture of claim 1 or claim 2, wherein the polymeric MDI comprises 25% to 40% by weight of monomeric MDI and 50% to 75% by weight of oligomeric MDI, based on the total weight of polymeric MDI.

4. The foam-forming reaction mixture of one of claim 1 to claim 3, wherein the polymeric MDI is present in an amount of least 90% by weight, at least 95% by weight, or at least 99% by weight, based on total weight of polyisocyanate.

5. The foam-forming reaction mixture of one of claim 1 to claim 4, wherein the saccharide-initiated polyol is present in an amount of 40 to 60% by weight or 40 to 50% by weight, based on the total weight of polyol that is present.

6. The foam-forming reaction mixture of one of claim 1 to claim 5, wherein the aromatic amine-initiated polyether polyol is present in an amount of 30 to 80% by weight, 30 to 60% by weight, 40 to 60% by weight or 40 to 50% by weight, based on the total weight of polyol that is present.

7. The foam-forming reaction mixture of one of claim 1 to claim 6, wherein the foam-forming reaction mixture comprises an aliphatic triol-initiated polyether polyol having an OH number of 400 to 600 mg KOH/g, 400 to 500 mg KOH/g, 450 to 500 mg KOH/g, or 465 to 475 mg KOH/g and a functionality of greater than 2 to 4, 2.5 to 3.5, or 3.0.

8. The foam-forming reaction mixture of claim 7, wherein the aliphatic triol-initiated polyether polyol is present in an amount of 1 to 20% by weight, 5 to 15% by weight, or 10 to 15% by weight, based on the total weight of polyol that is present.

9. The foam-forming reaction mixture of one of claim 1 to claim 8, wherein the foam-forming reaction mixture comprises less than 2% by weight, less than 1% by weight, or less than 0.1% by weight, based on total weight of polyol, of a polyol having a hydroxyl number of 15 to 300 mg/KOH g and a functionality of 1.5 to 4.0.

10. The foam-forming reaction mixture of one of claim 1 to claim 9, wherein the aromatic amine-initiated polyether polyol and the saccharide-initiated polyether polyol are present in a weight ratio of at least 0.5:1, 0.5:1 to 1.5:1, 0.7:1 to 1.0:1 or 0.8:1 to 0.9.5:1.

11. The foam-forming reaction mixture of one of claim 1 to claim 10, wherein the aromatic amine-initiated polyether polyol and the aliphatic triol-initiated polyether polyol are present in a weight ratio of at least 2:1, 2:1 to 4:1, 3:1 to 4:1 or 3:1 to 3.5:1 and/or the saccharide-initiated polyether polyol and the aliphatic triol-initiated polyether polyol are present in a weight ratio of at least 2:1, 3:1 to 5:1, 3.5:1 to 4.5:1 or 3.8:1 to 4.2:1.

12. The foam-forming reaction mixture of one of claim 1 to claim 11, wherein the physical blowing agent, such as cyclopentane, is present in an amount of at least 10% by weight or 10 to 15% by weight, based on the total weight of the foam-forming reaction mixture except for the weight of the polyisocyanate.

13. The foam-forming reaction mixture of one of claim 1 to claim 12, wherein the chemical blowing agent comprises water present in an amount of at least 1.70% by weight, 1.70 to 5.0% by weight, 2.0 to 4.0% by weight, 2.0 to 3.0% by weight, or 2.1 to 2.5% by weight, based on the total weight of the foam-forming reaction mixture except for the weight of the polyisocyanate.

14. The foam-forming reaction mixture of one of claim 1 to claim 13, wherein the catalyst comprises an amine catalyst in an amount of 0.05 to 4% by weight and a trimerization catalyst in an amount of 0.1 to 5% by weight, each based on total weight of the foam-forming reaction mixture except for the weight of the polyisocyanate.

15. A process for making a molded rigid foam comprising:
(a) depositing the foam-forming reaction mixture of one of claim 1 to claim 14 into a mold, and
(b) allowing the foam-forming reaction mixture to react in the mold to form the mold rigid foam.

## Patentansprüche

1. Schaumbildende Reaktionsmischung, umfassend:
(a) eine Polyolmischung, umfassend:
(i) ein saccharidgestartetes Polyetherpolyol mit einer Hydroxylzahl von 400 bis 600 mg KOH/g und einer Funktionalität von 4,0 bis 6,0, das in einer Menge von mindestens 40 Gew.-%, bezogen auf das Gesamtgewicht an Polyol, vorliegt, und
(ii) ein mit aromatischem Amin gestartetes Polyetherpolyol mit einer Hydroxylzahl von 100 bis 550 mg KOH/g und einer Funktionalität von 1,5 bis 5,0, das in einer Menge von mindestens 30 Gew.-%, bezogen auf das Gesamtgewicht an Polyol, vorliegt,
mit der Maßgabe, dass die Polyolmischung weniger als 3 Gew.-%, bezogen auf das Gesamtgewicht an Polyol, eines Polyols mit einer Hydroxylzahl von 15 bis 300 mg KOH/g und einer Funktionalität von 1,5 bis 4,0 enthält;
(b) eine Treibmittelzusammensetzung, umfassend (i) ein physikalisches Treibmittel und (ii) ein chemisches Treibmittel;
(c) einen Katalysator;
(d) ein Tensid; und
(e) ein Polyisocyanat, umfassend mindestens 85 Gew.-%, bezogen auf das Gesamtgewicht des Polyisocyanats, eines polymeren MDI mit einem NCO-Gehalt von 29,0 bis 32,0 Gew.-% und einer Viskosität bei 25 °C von 300 bis 750 mPa·s, gemessen nach EN ISO 3219, Oktober 1994, wobei das polymere MDI, bezogen auf das Gesamtgewicht des polymeren MDI, 25 bis 40 Gew.-% monomeres MDI umfasst.

2. Schaumbildende Reaktionsmischung nach Anspruch 1, wobei das polymere MDI eine Viskosität bei 25 °C, gemessen nach EN ISO 3219, Oktober 1994, von 320 bis 650 mPa·s, 350 bis 550 mPa·s oder 350 bis 500 mPa·s aufweist.

3. Schaumbildende Reaktionsmischung nach Anspruch 1 oder Anspruch 2, wobei das polymere MDI 25 bis 40 Gew.-% monomeres MDI und 50 bis 75 Gew.-% oligomeres MDI, bezogen auf das Gesamtgewicht des polymeren MDI, umfasst.

4. Schaumbildende Reaktionsmischung nach einem der Ansprüche 1 bis 3, wobei das polymere MDI in einer Menge von mindestens 90 Gew.-%, mindestens 95 Gew.-% oder mindestens 99 Gew.-%, bezogen auf das Gesamtgewicht des Polyisocyanats, vorliegt.

5. Schaumbildende Reaktionsmischung nach einem der Ansprüche 1 bis 4, wobei das saccharidgestartete Polyol in einer Menge von 40 bis 60 Gew.-% oder 40 bis 50 Gew.-%, bezogen auf das Gesamtgewicht an vorhandenem Polyol, vorliegt.

6. Schaumbildende Reaktionsmischung nach einem der Ansprüche 1 bis 5, wobei das mit aromatischem Amin gestartete Polyetherpolyol in einer Menge von 30 bis 80 Gew.-%, 30 bis 60 Gew.-%, 40 bis 60 Gew.-% oder 40 bis 50 Gew.-%, bezogen auf das Gesamtgewicht n vorhandenem Polyol, vorliegt.

7. Schaumbildende Reaktionsmischung nach einem der Ansprüche 1 bis 6, wobei die schaumbildende Reaktionsmischung ein mit aliphatischem Triol gestartetes Polyetherpolyol mit einer OH-Zahl von 400 bis 600 mg KOH/g, 400 bis 500 mg KOH/g, 450 bis 500 mg KOH/g oder 465 bis 475 mg KOH/g und einer Funktionalität von mehr als 2 bis 4, 2,5 bis 3,5, oder 3,0 umfasst.

8. Schaumbildende Reaktionsmischung nach Anspruch 7, wobei das mit aliphatischem Triol gestartete Polyetherpolyol in einer Menge von 1 bis 20 Gew.-%, 5 bis 15 Gew.-% oder 10 bis 15 Gew.-%, bezogen auf das Gesamtgewicht an vorhandenem Polyol, vorliegt.

9. Schaumbildende Reaktionsmischung nach einem der Ansprüche 1 bis 8, wobei die schaumbildende Reaktionsmischung weniger als 2 Gew.-%, weniger als 1 Gew.-% oder weniger als 0,1 Gew.-%, bezogen auf das Gesamtgewicht an Polyol, eines Polyols mit einer Hydroxylzahl von 15 bis 300 mg/KOH g und einer Funktionalität von 1,5 bis 4,0 umfasst.

10. Schaumbildende Reaktionsmischung nach einem der Ansprüche 1 bis 9, wobei das mit aromatischem Amin gestartete Polyetherpolyol und das saccharidgestartete Polyetherpolyol in einem Gewichtsverhältnis von mindestens 0,5:1, 0,5:1 bis 1,5:1, 0,7:1 bis 1,0:1 oder 0,8:1 bis 0,95:1 vorliegen.

11. Schaumbildende Reaktionsmischung nach einem der Ansprüche 1 bis 10, wobei das mit aromatischem Amin gestartete Polyetherpolyol und das mit aliphatischem Triol gestartete Polyetherpolyol in einem Gewichtsverhältnis von mindestens 2:1, 2:1 bis 4:1, 3:1 bis 4:1 oder 3:1 zu 3,5:1 vorliegen und/oder das saccharidgestartete Polyetherpolyol und das mit aliphatischem Triol gestartete Polyetherpolyol in einem Gewichtsverhältnis von mindestens 2:1, 3:1 bis 5:1, 3,5:1 bis 4,5:1 oder 3,8:1 bis 4,2:1 vorliegen.

12. Schaumbildende Reaktionsmischung nach einem der Ansprüche 1 bis 11, wobei das physikalische Treibmittel, wie Cyclopentan, in einer Menge von mindestens 10 Gew.-% oder 10 bis 15 Gew.-%, bezogen auf das Gesamtgewicht der schaumbildenden Reaktionsmischung mit Ausnahme des Gewichts des Polyisocyanats, vorliegt.

13. Schaumbildende Reaktionsmischung nach einem der Ansprüche 1 bis 12, wobei das chemische Treibmittel Wasser umfasst, das in einer Menge von mindestens 1,70 Gew.-%, 1,70 bis 5,0 Gew.-%, 2,0 bis 4,0 Gew.-%, 2,0 bis 3,0 Gew.-% oder 2,1 bis 2,5 Gew.-%, bezogen auf das Gesamtgewicht der schaumbildenden Reaktionsmischung mit Ausnahme des Gewichts des Polyisocyanats, vorliegt.

14. Schaumbildende Reaktionsmischung nach einem der Ansprüche 1 bis 13, wobei der Katalysator einen Aminkatalysator in einer Menge von 0,05 bis 4 Gew.-% und einen Trimerisierungskatalysator in einer Menge von 0,1 bis 5 Gew.-%, jeweils bezogen auf das Gesamtgewicht der schaumbildenden Reaktionsmischung mit Ausnahme des Gewichts des Polyisocyanats, umfasst.

15. Verfahren zur Herstellung eines Formhartschaums, umfassend:
(a) Einbringen der schaumbildenden Reaktionsmischung nach einem der Ansprüche 1 bis 14 in eine Form und
(b) Reagierenlassen der schaumbildenden Reaktionsmischung in der Form zur Bildung des Formhartschaums.

## Revendications

1. Mélange réactionnel de formation de mousse comprenant :
(a) un mélange de polyols comprenant :
(i) un polyéther polyol initié par un saccharide ayant un indice d'hydroxyle de 400 à 600 mg KOH/g et une fonctionnalité de 4,0 à 6,0, qui est présent en une quantité d'au moins 40 % en poids, par rapport au poids total de polyol, et
(ii) un polyéther polyol initié par une amine aromatique ayant un indice d'hydroxyle de 100 à 550 mg KOH/g et une fonctionnalité de 1,5 à 5,0, qui est présent en une quantité d'au moins 30 % en poids, par rapport au poids total de polyol,
sous réserve que le mélange de polyols contienne moins de 3 % en poids, par rapport au poids total de polyol, d'un polyol ayant un indice d'hydroxyle de 15 à 300 mg KOH/g et une fonctionnalité de 1,5 à 4,0 ;
(b) une composition d'agent gonflant comprenant (i) un agent gonflant physique, et (ii) un agent gonflant chimique ;
(c) un catalyseur ;
(d) un tensioactif ; et
(e) un polyisocyanate comprenant au moins 85 % en poids, par rapport au poids total de polyisocyanate, d'un MDI polymérique ayant une teneur en NCO de 29,0 % à 32,0 % en poids et une viscosité à 25 °C de 300 à 750 mPa·s, mesurée selon la norme EN ISO 3219, octobre 1994, le MDI polymérique comprenant, par rapport au poids total du MDI polymérique, 25 % à 40 % en poids de MDI monomérique.

2. Mélange réactionnel de formation de mousse selon la revendication 1, dans lequel le MDI polymérique a une viscosité à 25 °C, mesurée selon la norme EN ISO 3219, octobre 1994, de 320 à 650 mPa·s, de 350 à 550 mPa·s ou de 350 à 500 mPa·s.

3. Mélange réactionnel de formation de mousse selon la revendication 1 ou la revendication 2, dans lequel le MDI polymérique comprend 25 % à 40 % en poids de MDI monomère et 50 % à 75 % en poids de MDI oligomère, par rapport au poids total de MDI polymérique.

4. Mélange réactionnel de formation de mousse selon l'une des revendications 1 à 3, dans lequel le MDI polymérique est présent en une quantité d'au moins 90 % en poids, d'au moins 95 % en poids, ou d'au moins 99 % en poids, par rapport au poids total de polyisocyanate.

5. Mélange réactionnel de formation de mousse selon l'une des revendications 1 à 4, dans lequel le polyol initié par un saccharide est présent en une quantité de 40 à 60 % en poids ou de 40 à 50 % en poids, par rapport au poids total de polyol qui est présent.

6. Mélange réactionnel de formation de mousse selon l'une des revendications 1 à 5, dans lequel le polyéther polyol initié par une amine aromatique est présent en une quantité de 30 à 80 % en poids, de 30 à 60 % en poids, de 40 à 60 % en poids ou de 40 à 50 % en poids, par rapport au poids total du polyol qui est présent.

7. Mélange réactionnel de formation de mousse selon l'une des revendications 1 à 6, dans lequel le mélange réactionnel de formation de mousse comprend un polyéther polyol initié par un triol aliphatique ayant un indice d'OH de 400 à 600 mg KOH/g, 400 à 500 mg KOH/g, 450 à 500 mg KOH/g, ou 465 à 475 mg KOH/g et une fonctionnalité supérieure à 2 à 4, 2,5 à 3,5, ou 3,0.

8. Mélange réactionnel de formation de mousse selon la revendication 7, dans lequel le polyéther polyol initié par un triol aliphatique est présent en une quantité de 1 à 20 % en poids, de 5 à 15 % en poids ou de 10 à 15 % en poids, par rapport au poids total du polyol qui est présent.

9. Mélange réactionnel de formation de mousse selon l'une des revendications 1 à 8, dans lequel le mélange réactionnel de formation de mousse comprend moins de 2 % en poids, moins de 1 % en poids, ou moins de 0,1 % en poids, par rapport au poids total de polyol, d'un polyol ayant un indice d'hydroxyle de 15 à 300 mg/KOH g et une fonctionnalité de 1,5 à 4,0.

10. Mélange réactionnel de formation de mousse selon l'une des revendications 1 à 9, dans lequel le polyéther polyol initié par une amine aromatique et le polyéther polyol initié par un saccharide sont présents dans un rapport pondéral d'au moins 0,5:1, 0,5:1 à 1.5:1, 0,7:1 à 1,0:1 ou 0,8:1 à 0,95:1.

11. Mélange réactionnel de formation de mousse selon l'une des revendications 1 à 10, dans lequel le polyéther polyol initié par une amine aromatique et le polyéther polyol initié par un triol aliphatique sont présents dans un rapport pondéral d'au moins 2:1, 2:1 à 4:1, 3:1 à 4:1 ou 3:1 à 3,5:1 et/ou le polyéther polyol initié par un saccharide et le polyéther polyol initié par un triol aliphatique sont présents dans un rapport pondéral d'au moins 2:1, 3:1 à 5:1, 3,5:1 à 4,5:1 ou 3,8:1 à 4,2:1.

12. Mélange réactionnel de formation de mousse selon l'une des revendications 1 à 11, dans lequel l'agent gonflant physique, tel que le cyclopentane, est présent en une quantité d'au moins 10 % en poids ou de 10 à 15 % en poids, par rapport au poids total du mélange réactionnel de formation de mousse, à l'exception du poids du polyisocyanate.

13. Mélange réactionnel de formation de mousse selon l'une des revendications 1 à 12, dans lequel l'agent gonflant chimique comprend de l'eau présente en une quantité d'au moins 1,70 % en poids, 1,70 à 5,0 % en poids, 2,0 à 4,0 % en poids, 2,0 à 3,0 % en poids, ou 2,1 à 2,5 % en poids, par rapport au poids total du mélange réactionnel de formation de mousse, à l'exception du poids du polyisocyanate.

14. Mélange réactionnel de formation de mousse selon l'une des revendications 1 à 13, dans lequel le catalyseur comprend un catalyseur de type amine en une quantité de 0,05 à 4 % en poids et un catalyseur de trimérisation en une quantité de 0,1 à 5 % en poids, chacun sur la base du poids total du mélange réactionnel de formation de mousse, à l'exception du poids du polyisocyanate.

15. Procédé de fabrication d'une mousse rigide moulée comprenant :
(a) le dépôt dans un moule du mélange réactionnel de formation de mousse selon l'une des revendications 1 à 14, et
(b) le fait de laisser réagir le mélange réactionnel de formation de mousse dans le moule pour former la mousse rigide moulée.
